(19) Europäisches Patentamt
European Patent Office
Office européen des brevets

(11) **EP 3 052 336 B1**

(12) **FASCICULE DE BREVET EUROPEEN**

(45) Date de publication et mention
de la délivrance du brevet:
**10.01.2018 Bulletin 2018/02**

(21) Numéro de dépôt: **14789319.2**

(22) Date de dépôt: **30.09.2014**

(51) Int Cl.:
***B60L 3/12*** *(2006.01)*  ***B60L 11/18*** *(2006.01)*
***H02J 7/00*** *(2006.01)*  ***H02J 7/02*** *(2016.01)*
***B60L 3/00*** *(2006.01)*

(86) Numéro de dépôt international:
**PCT/FR2014/052463**

(87) Numéro de publication internationale:
**WO 2015/049455 (09.04.2015 Gazette 2015/14)**

(54) **SYSTÈME D'ALIMENTATION ÉLECTRIQUE POUR VÉHICULE AUTOMOBILE**

ELEKTRISCHES VERSORGUNGSYSTEM FÜR EIN KRAFTFAHRZEUG

POWER SUPPLY SYSTEM FOR A MOTOR VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.10.2013 FR 1359493**

(43) Date de publication de la demande:
**10.08.2016 Bulletin 2016/32**

(73) Titulaire: **Renault S.A.S.**
**92100 Boulogne-Billancourt (FR)**

(72) Inventeurs:
• **DOLCINI, Pietro**
**F-75013 Paris (FR)**
• **OBERTI, Claire**
**F-75015 Paris (FR)**
• **CHAUVELIER, Eric**
**F-78320 Le Mesnil Saint Denis (FR)**

(56) Documents cités:
**EP-A1- 1 981 143**      **EP-A1- 2 515 411**
**DE-A1-102010 062 369**   **FR-A1- 2 964 506**

**Description**

L'invention a pour objet les dispositifs de recharge de batterie automobile, et en particulier les dispositifs de recharge de batterie servant à alimenter un moteur apte à propulser un véhicule électrique ou hybride.

Ces dispositifs peuvent être équipés de dispositifs de mesure de résistance d'isolation, qui ont pour but de vérifier qu'une des bornes de la batterie à haute tension alimentant le moteur, n'est pas en contact électrique avec la carcasse du véhicule. On protège ainsi les personnes qui viendraient par la suite en contact simultanément avec la carcasse du véhicule et l'autre des bornes de la batterie.

L'invention concerne plus particulièrement les chargeurs de batterie non isolés. On considère comme chargeur isolé un chargeur isolé galvaniquement par rapport au réseau d'alimentation : le courant traversant le chargeur est induit par un circuit primaire lié au réseau électrique, sans connexion électrique entre le réseau et le chargeur.

Un chargeur non isolé est un chargeur n'ayant pas une isolation galvanique entre le réseau électrique et la batterie. Dans le cas d'un chargeur isolé, la détection d'un défaut d'isolement, c'est-à-dire la détection d'un niveau de résistance d'isolement trop faible, inférieur à quelque kΩ, peut être effectuée au cours de la charge de la batterie. La charge de la batterie peut alors être lancée sans vérification préalable du niveau d'isolement, et est arrêtée en cas de détection d'un défaut d'isolement ultérieur pendant la charge.

Dans le cas d'un chargeur non isolé, la détection d'un défaut d'isolement ne peut être effectuée pendant la charge. En effet, la mesure de défaut d'isolement se fait en général en connectant des impédances de mesure spécifiques soit entre la borne + de la batterie et la carcasse du véhicule, soit entre la borne - de la batterie et la carcasse du véhicule.

Si cette opération est effectuée pendant la charge, les courants ainsi envoyés vers la carcasse du véhicule, elle-même alors reliée à la prise de terre, peuvent être suffisamment importants pour aveugler les systèmes de disjonction différentiels du réseau. En outre ces courants peuvent présenter un danger pour un utilisateur qui viendrait toucher la carcasse du véhicule.

Un système d'alimentation électrique pour véhicule automobile selon l'état de la technique est connu du document DE-A-10 2010 062 369. L'invention a pour but de proposer un dispositif de recharge de batterie apte à prévenir une éventuelle fuite de courant vers la carcasse pendant la recharge de la batterie sur secteur, tout en rendant possible un démarrage de l'opération de recharge en un temps relativement court, par exemple quelques secondes, après que l'utilisateur ait requit une telle charge, par exemple en branchant une prise du chargeur sur le secteur.

A cette fin, l'invention propose un système d'alimentation électrique pour véhicule automobile, comprenant un chargeur, une batterie d'accumulateur et un consommateur électrique aptes à recevoir par l'intermédiaire du chargeur, du courant électrique transitant depuis un réseau d'alimentation électrique extérieur au véhicule. Le système d'alimentation est supporté -mécaniquement-au moins en partie par une carcasse conductrice configurée pour pouvoir être reliée à une prise de terre du réseau extérieur. Le système comporte un dispositif d'estimation d'une résistance minimale d'isolation entre les bornes de la batterie, du consommateur électrique et la carcasse. Le système comporte une unité de lancement des phases de charge de la batterie, configurée pour, lorsque le consommateur électrique reçoit une commande de mise en fonctionnement :

- interdire temporairement une phase de recharge de la batterie (10),
- estimer ladite résistance minimale d'isolation,
- autoriser la reprise de ladite phase de recharge de la batterie (10) seulement si ladite résistance minimale d'isolation ($R_{filt}(t)$) mesurée est supérieure à un premier seuil ($R_{seuil\_1}$).

Le consommateur électrique peut être un compresseur.

L'unité de lancement peut être configurée pour interdire une phase de recharge de la batterie et pour émettre un message d'alerte si pendant une durée supérieure à un troisième seuil de temps, la résistance minimale d'isolation reste inférieure à un second seuil de résistance. Le premier seuil de résistance peut être égal au second seuil de résistance. Le second seuil de résistance peut être légèrement différent du premier seuil de résistance, pour tenir compte du fait que la valeur filtrée est alors plus proche a priori de la valeur réelle que l'on souhaite déterminer.

L'unité de lancement peut être configurée pour interdire temporairement, sans message d'alerte, une phase de recharge de la batterie si la résistance minimale d'isolation est inférieure au premier seuil de résistance pendant une durée inférieure à un troisième seuil de temps à partir de la demande d'un utilisateur de lancer la charge.

La résistance minimale d'isolation est de préférence une valeur filtrée, au moins une valeur d'initialisation du calcul de la valeur filtrée étant inférieure au premier seuil de résistance.

L'unité de lancement peut être configurée pour, pendant les mesures de résistance d'isolation, fermer au moins une connexion reliant une bobine du chargeur à une borne de la batterie et du consommateur électrique. La fermeture peut être une fermeture sur une fraction du temps de la mesure, par exemple si la fermeture de la connexion se fait au moyen d'un transistor.

Selon un mode de réalisation avantageux, la bobine est en même temps une bobine appartenant au moteur du véhicule.

Le dispositif d'estimation de la résistance minimale d'isolation peut comprendre une ou plusieurs impédances qui peuvent être alternativement connectées et déconnectées entre une des bornes de la batterie et la carcasse.

L'unité de lancement peut être configurée pour déconnecter d'avec les bornes de la batterie, au moins une résistance servant au calcul de la résistance d'isolement, avant d'autoriser la connexion du chargeur à une ou plusieurs phases du réseau extérieur, en vue de démarrer la charge de la batterie.

L'unité de lancement peut être configurée pour déconnecter d'avec les bornes de la batterie, avant d'autoriser la connexion du chargeur à une ou plusieurs phases du réseau extérieur, toutes les impédances utilisées par le dispositif d'estimation de la résistance minimale d'isolation, et reliant une borne de la batterie à la carcasse.

L'unité de lancement est configurée pour interdire toute mesure de résistance d'isolation tant que le chargeur est connecté à une ou plusieurs phases du réseau extérieur. Les buts, caractéristiques et avantages de l'invention apparaîtront à la lecture de la description suivante, donnée uniquement à titre d'exemple non limitatif, et faite en référence aux dessins annexés sur lesquels :

- la figure 1 illustre schématiquement un système d'alimentation électrique d'un véhicule automobile selon l'invention,
- la figure 2 illustre un schéma simplifié de fonctionnement d'une unité de lancement de charge de batterie appartenant au système d'alimentation précédent, et
- la figure 3 illustre un chronogramme de la charge du véhicule électrique avec la mise en fonctionnement d'un compresseur.

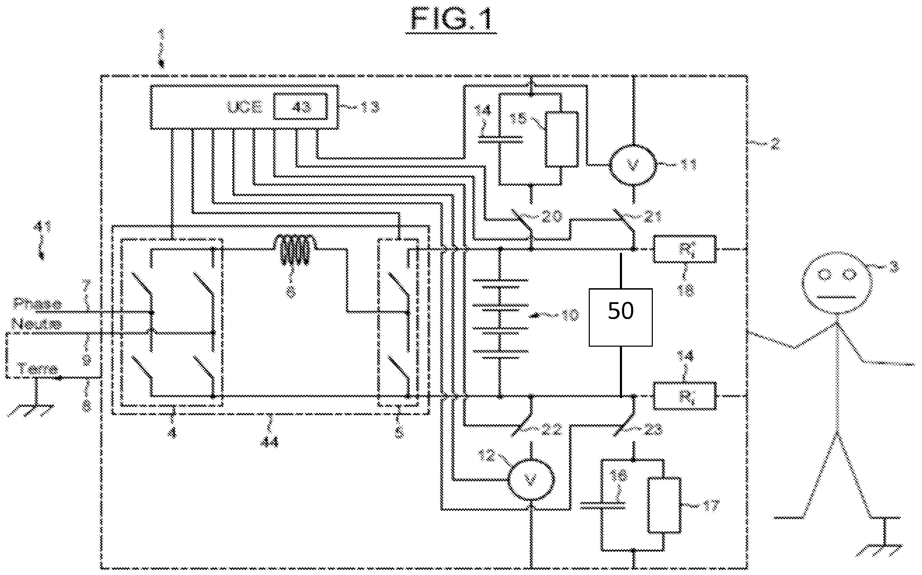

Comme illustré sur la figure 1, un système d'alimentation électrique 1 comprend une batterie 10 d'accumulateurs électrique 1 dont les bornes sont reliées à deux bornes de sortie d'un onduleur 5.

Une des bornes d'entrée de l'onduleur 5 est reliée à une borne de sortie d'un redresseur de courant 4. L'autre borne d'entrée de l'onduleur 5 est reliée à une bobine 6 elle-même reliée à la seconde borne de sortie du redresseur 4. La bobine 6 peut faire partie du bobinage d'un moteur servant à propulser le véhicule. Le redresseur 4, l'onduleur 5 et la bobine 6 font partie d'un chargeur 44 apte à alimenter la batterie 10 en courant à partir du réseau électrique 41.

Les bornes d'entrée du redresseur sont aptes à être connectées respectivement à une phase 7 et à un neutre 9 d'un réseau d'alimentation 41. Le chargeur 44 est de préférence également apte à être connecté à un réseau d'alimentation triphasé. Une partie au moins d'une carcasse métallique 2 du véhicule supportant le système d'alimentation 1 est apte à être reliée, par une borne de terre 8, à une prise de terre du réseau d'alimentation 41. On suppose qu'une première résistance d'isolation $R_i^-$, référencée 14, existe entre la borne - de la batterie et la borne de terre 8. On suppose également qu'une seconde résistance d'isolation $R_i^+$, référencée 18, existe entre la borne + de la batterie 10 et la borne de terre 8.

Pour permettre d'estimer ces résistances d'isolation 14 et 18, le système d'alimentation 1 comprend un premier voltmètre 11 disposé entre la borne de terre 8 et la borne + de la batterie, et qui peut être déconnecté de la batterie par un interrupteur 21. Selon des variantes de réalisation, l'interrupteur 21 peut également être disposé entre la borne de terre 8 et le voltmètre 11. Le système d'alimentation électrique 1 comprend également un second voltmètre 12 disposé entre la borne - de la batterie et la borne de terre 8, et qui peut être déconnecté de la borne - de la batterie à l'aide d'un interrupteur 22. L'interrupteur 22 peut aussi se trouver entre le voltmètre 12 et la borne de terre 8.

Le système d'alimentation électrique comprend une première impédance de mesure disposée en parallèle au premier voltmètre 11, entre la borne + et la borne de terre 8. Cette première impédance de mesure peut être composée d'une première capacité 19 placée en parallèle à une résistance 15, ou simplement d'une résistance 15. Elle peut être déconnectée de la borne + de la batterie à l'aide d'un interrupteur 20, qui peut, suivant les variantes de réalisation se trouver également entre l'impédance de mesure et la borne de terre 8.

De manière similaire, une seconde impédance de mesure composée par exemple d'une capacité 16 placée en parallèle avec une résistance 17, est disposée entre la borne - de la batterie 10 et la borne de terre 8, cette seconde impédance pouvant être déconnectée de la borne - de la batterie à l'aide d'un interrupteur 23. L'interrupteur 23 peut bien entendu se trouver également entre la borne de terre 8 et l'impédance de mesure. La seconde impédance de mesure peut être composée uniquement de la résistance 17.

L'unité de commande électronique 13 est reliée aux interrupteurs 20, 21, 22, 23 de manière à pouvoir piloter leur ouverture ou leur fermeture. L'unité de commande électronique 13 est reliée aux voltmètres 11 et 12 de manière à pouvoir lire les valeurs mesurées par ces voltmètres.

L'unité de commande électronique 13 est également reliée au redresseur 4 et à l'onduleur 5 de manière à pouvoir piloter les différents transistors ou interrupteurs compris dans ce redresseur et cet onduleur, et de manière à pouvoir imposer des rapports de hachage appropriés, soit à l'utilisation du redresseur et de l'onduleur pour alimenter le moteur électrique, soit à leur utilisation en vue de recharger la batterie 10.

L'unité de commande électronique 13 comprend une unité 43 de lancement de charge de batterie, qui est configurée pour permettre de vérifier, avant de lancer une charge de batterie, l'absence d'un défaut d'isolation rédhibitoire. L'unité 43 de lancement de charge de batterie, permet, après le lancement de la charge, de mettre le système 1 dans une configuration limitant les risques de fuites électriques vers la carcasse du véhicule. Avant le lancement de la charge pour déterminer une valeur de résistance d'isolation $R_i(t)$, l'unité de commande électronique 13 procède par exemple comme suit : la borne de terre 8 étant connectée à la terre du réseau 41, l'unité de commande électronique 13 ouvre dans un premier temps les interrupteurs 20, 22, 23 et ferme l'interrupteur 21, elle mesure alors une première tension $V_1$. Elle ferme ensuite l'interrupteur 20 et mesure, à l'aide du voltmètre 11, une tension $V_2$.

Elle ouvre ensuite à nouveau les interrupteurs 20, 21 et 23, ferme l'interrupteur 22 et mesure, à l'aide du second voltmètre 12, une tension $V'_1$. Elle ferme ensuite l'interrupteur 23 et mesure, toujours à l'aide du voltmètre 12, une tension $V'_2$.

A l'aide de formules connues, l'unité de commande électronique 13 en déduit ensuite une valeur $R_i(t)$ correspondant à une moyenne des résistances d'isolation $R_i^-$ et $R_i^+$, par exemple la valeur $R_i(t)$ équivalente aux deux résistances en parallèle, soit

$$R_i(t) = \frac{R_i^- . R_i^+}{R_i^- + R_i^+}$$

Dans le cas de figure où les deux impédances de mesure sont limitées à deux résistances 15 et 17 de même valeur $R_o$, $R_i(t)$ vaut :

$$si\ V_1 \geq V'_1 \qquad\qquad R_i(t) = \frac{V_1 - V_2}{V_2}$$

$$si\ V_1 \leq V'_1 \qquad\qquad R_i(t) = \frac{V'_1 - V'_2}{V'_2}$$

L'unité de commande électronique réitère les opérations précédentes de manière à obtenir une suite de valeurs $R_i(t)$ qu'elle filtre pour converger vers une valeur stabilisée $R_{filt}(t)$.

Les valeurs d'initialisation de la valeur de filtrage peuvent être volontairement faibles, par exemple nulles, de manière à sous-estimer la résistance d'isolation plutôt que de la surestimer.

Pendant ces opérations de mesure, l'unité de commande électronique 13 actionne les transistors de l'onduleur 5 de manière à connecter électriquement la bobine 6 à une borne de la batterie, ici la borne +. Ainsi, si un défaut d'isolation existe entre la bobine 6 et la carcasse 2, il peut être détecté par la mesure. Les transistors peuvent être actionnés de manière à assurer la connexion pendant une fraction seulement du temps nécessaire à chaque mesure de tension, par exemple pendant 50% du temps nécessaire à la mesure de chaque tension.

De plus comme illustré à la figure 1, le système d'alimentation électrique 1 comporte un consommateur électrique, dans cet exemple le consommateur électrique est du type compresseur 50 monté en parallèle de la batterie 10, entre la batterie 10 et les résistances d'isolation 14, 18. Le compresseur 50 est une machine mécanique entrainé par un moteur électrique et permet de refroidir la batterie 10 ou l'habitacle (non représenté) en fonction de la température, par exemple si la température dépasse des seuils ou des commandes imposant au compresseur 50 de fonctionner, par exemple mise en route de la climatisation une heure avant un départ. Le compresseur 50 comporte, en outre, des interrupteurs pouvant être commandés par l'unité de commande électronique 13 pour relier ou isoler le compresseur au circuit électrique haute tension du véhicule, notamment pour effectuer les mesures de résistance d'isolation.

L'unité 43 de lancement de charge de batterie intervient, également, pour vérifier un défaut d'isolation rédhibitoire du compresseur 50. Le compresseur 50 est mis en fonctionnement selon la température batterie ou habitacle comme vu précédemment. Il peut arriver que le compresseur 50 soit mis en fonctionnement alors que la batterie 10 est en charge, lors d'une charge batterie 10 le compresseur 50 est alimenté par le réseau haute tension. Cette configuration électrique peut introduire un courant de fuite comme expliqué pour la batterie, il est nécessaire que l'unité 43 de lancement de charge de batterie limite les risques de fuites électriques vers la carcasse du véhicule en mesurant la résistance d'isolation Ri(t). La mesure de la résistance d'isolation s'effectue de la même manière que décrit précédemment en ajoutant les étapes de commutations des interrupteurs du compresseur pour déterminer les moyennes des résistances d'isolations $R_i^+$ et $R_i^-$. La mesure de la résistance d'isolation Ri(t) correspond à la mesure de la résistance d'isolation sur le circuit électrique haute tension, batterie 10, compresseur 50 et tous les éléments présents sur le circuit haute tension.

Avant le lancement de la charge ou au cours de la charge, la mise en fonctionnement du compresseur 50 commande l'arrêt de la charge ou diffère le début de la charge jusqu'à ce que la mesure de la résistance d'isolation Ri(t) soit effectuée. La mesure de la résistance d'isolation s'effectue avec le compresseur 50 en fonctionnement, c'est-à-dire le moteur du compresseur 50 est dit tournant, afin que les calculs tiennent compte de la résistance du stator et du rotor compris dans le moteur électrique du compresseur 50.

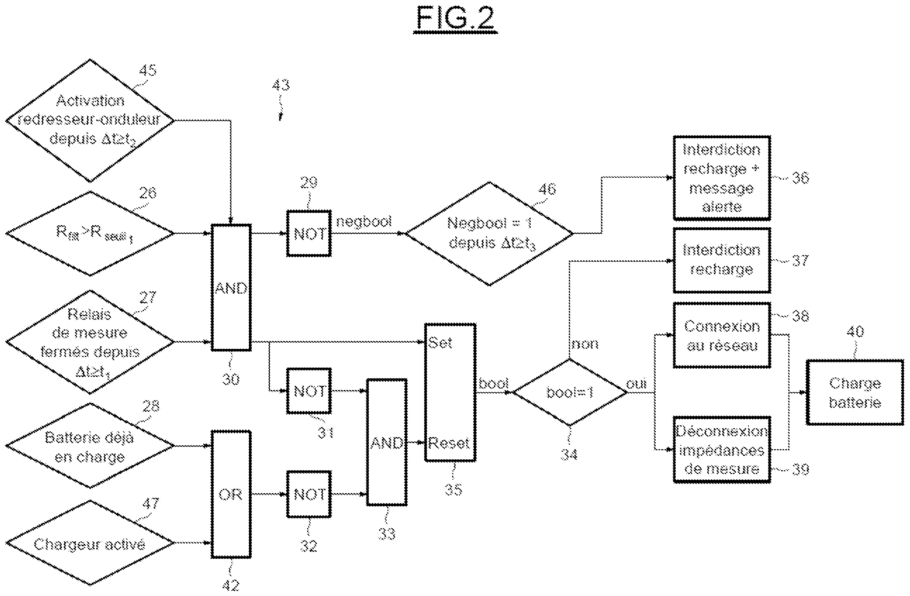

La figure 2 illustre la manière dont l'unité 43 de lancement de charge utilise les valeurs de résistance d'isolation filtrées $R_{filt}(t)$ pour décider de lancer une phase de charge de la batterie ou pour, au contraire, interdire une phase de recharge de la batterie. Les valeurs résistances d'isolation filtrées $R_{filt}(t)$ sont traitées de la même façon par l'unité 43 de lancement de charge que ce soit pour la batterie uniquement ou pour la batterie et au moins un consommateur électrique.

L'unité 43 de lancement de charge initialise à zéro un compteur de temps t au moment où un utilisateur 3 du véhicule connecte le chargeur du véhicule à un réseau électrique 41. L'unité de lancement 43 effectue ensuite une série de tests logiques 26, 27, 28, 45, 46, 47 en utilisant ente autre la valeur filtrée $R_{filt}(t)$ de résistance d'isolation. Le test 26 vérifie si la résistance instantanée d'isolation est supérieure à un premier seuil de résistance $R_{seuil\_1}$. Le test 27 vérifie si les relais de mesure sont fermés depuis un intervalle de temps $\Delta t$ supérieur à un premier seuil de temps $t_1$, c'est-à-dire si la bobine 6 est connectée électriquement à une des bornes de la batterie, comme mentionné plus haut. Le test 28 vérifie si une procédure de charge n'est pas déjà en cours pour la batterie.

Le test 45 vérifie si le redresseur 4 et l'onduleur 5 sont en configuration adaptée pour la recharge de la batterie depuis un intervalle de temps supérieur à un second seuil de temps $t_2$. Le test 47 vérifie si le chargeur n'est pas déjà en configuration autorisant le début d'une charge de la batterie. Le test 46 vérifie si un booléen negbool lui parvenant depuis l'opérateur 29, et qui est la négation du « Et » des tests 45,26 et 27, est resté positif depuis un intervalle de temps supérieur à un troisième seuil de temps $t_3$.

Les résultats de ces tests sont alors combinés à l'aide d'opérateurs logiques 29, 30, 31, 32, 33, 42.

Ainsi, si les résultats des test 26, 27 et 45 sont négatifs et le test 46 positif, ce qui implique en particulier que la résistance filtrée d'isolation est restée inférieure au premier seuil de résistance pendant un intervalle de temps supérieur ou égal à $t_3$, alors l'unité de lancement 43 lance une procédure 36 d'interdiction de recharge de la batterie et affiche un message d'alerte (et/ou émet un message auditif d'alerte).

Si le résultat des tests 26 et 45 sont positifs, donc si les relais de mesure sont fermés, si la partie redresseur-onduleur activée et si pour au moins une des mesures effectuées depuis t=0, la valeur de résistance d'isolation est devenue supérieure au seuil de résistance, un opérateur logique 30 "and" envoie un signal positif sur une entrée « set » d'un commutateur flip-flop 35, qui émet alors un (signal) booléen égal à « 1 » jusqu'à ce que ce commutateur flip-flop 35 reçoive sur sa seconde entrée « reset » un signal positif. Sur cette seconde entrée « reset » de l'opérateur flip-flop 35, arrive le produit effectué par un opérateur logique 33, qui multiplie l'inverse de la sortie de l'opérateur 42 et l'inverse de la sortie de l'opérateur 30. L'opérateur 42 effectue la somme des tests 28 et 47.

Si l'entrée « reset » du commutateur flip-flop est activée, le commutateur flip-flop 35 bascule alors sa sortie " bool " à une valeur logique négative, par exemple à la valeur " 0 ".

Un test logique 34 teste la valeur de la sortie "bool" de l'opérateur flip-flop 35. Si cette valeur est négative, l'unité de lancement 43 interdit à une étape 37 la recharge de la batterie, sans cependant afficher de message d'alerte, et en attendant de voir comment la situation va évoluer dans le temps.

Si la valeur de l'opérateur bool est positive, c'est-à-dire si on a à la fois pu détecter une valeur de résistance d'isolation filtrée $R_{filt}(t)$ supérieure au seuil de résistance $R_{seuil\_1}$, et on a pu détecter des relais de mesure fermés depuis $t_1$ et un redresseur -onduleur activé depuis $t_2$,, alors l'unité de lancement 43 lance, à une étape 40, la charge de la batterie. Avant cette étape 40, l'unité de lancement 43 effectue des opérations préparatoires 38 et 39 : en 38, elle autorise la connexion du système d'alimentation 1 à la phase et au neutre du réseau 41. En 39, elle ouvre les interrupteurs 20, 21, 22, 23 afin d'éviter de favoriser les fuites de courant passant par les impédances de mesure 19, 15 et 16-17, ou par les voltmètres 11 et 12.

Si les premières valeurs instantanées $R_i(t)$ ne sont pas conformes, ou si une autre anomalie telle que des relais de mesure ouverts est détectée, l'interdiction de recharge émise à l'étape 37 n'empêche pas un basculement ultérieur de l'opérateur flip-flop 35 par une entrée positive sur son entrée « set », ce qui conduit alors à l'autorisation de recharger la batterie en phase 40.

L'unité de lancement de charge selon l'invention autorise donc la charge dès qu'une valeur suffisamment élevée de résistance d'isolation est détecté, même si cette valeur ne correspond pas encore à une valeur filtrée stabilisée. Pour tenir compte des incertitudes de calcul sur les premières estimations de la résistance d'isolation, le premier seuil de résistance peut être majoré par rapport aux seuils usuellement jugés acceptables du point de vue sécuritaire. L'unité de lancement de charge selon l'invention protège l'utilisateur d'un défaut d'isolation éventuel, tout en permettant, dans la majorité des cas, de démarrer la charge en moins d'une minute.

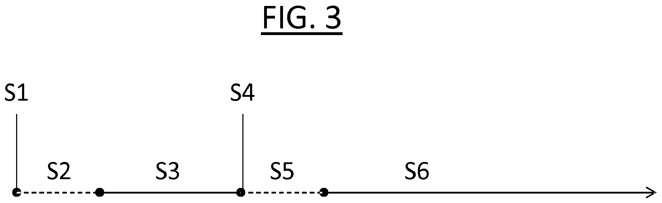

La figure 3 représente un exemple de charge sous forme de chronogramme, à l'instant S1 de demande de charge est formulée. L'instant S1 est suivi par une phase S2 de mise en application des étapes par l'unité 13 de lancement de charge décrites ci-dessus pour déterminer si la recharge est permise ou non. A l'issue de la phase S2, la charge est permise par l'unité 43 de lancement de charge et la charge est lancée pendant une phase S3.

A l'instant S4, une demande de refroidissement de la batterie 10 commande la mise en fonctionnement du compresseur 50, l'unité 43 de lancement de la charge arrête la charge de la batterie 10. L'unité 43 de lancement de charge met en application, au cours d'une phase S5, les étapes décrites ci-dessus dessus pour déterminer si la recharge est permise ou non, après la mise en fonctionnement du compresseur 50. A l'issue de la phase S5, la charge est permise par l'unité 43 de lancement de charge et la charge est lancée pendant une phase S6 jusqu'à la charge complète de la batterie 10.

L'invention ne se limite pas aux exemples de réalisation décrit, et peut se décliner en de nombreuses variantes. Le chargeur 44 peut ne pas comporter de bobine appartenant au moteur du véhicule. Le chargeur peut présenter une autre structure qu'un redresseur associé à une bobine et à un onduleur, notamment si la batterie est destinée à être rechargée à partir d'un réseau délivrant du courant continu. Les voltmètres 11 et 12 peuvent être dépourvus d'interrupteurs 21 et 22. Les impédances de mesure peuvent comprendre des capacités comme illustré sur la figure 1, les résistances d'isolation étant alors calculées par l'unité de commande électronique à partir d'un temps nécessaire à la décharge des capacités.

**Revendications**

1. Système d'alimentation électrique (1) pour véhicule automobile, comprenant un chargeur (44), une batterie d'accumulateurs (10) et un consommateur électrique aptes à recevoir par l'intermédiaire du chargeur (44), du courant électrique transitant depuis un réseau (41) d'alimentation électrique extérieur au véhicule, le système d'alimentation (1) étant supporté au moins en partie par une carcasse (2) conductrice configurée pour pouvoir être reliée à une prise de terre du réseau extérieur (41), le système comportant un dispositif d'estimation d'une résistance minimale d'isolation ($R_{filt}(t)$) entre les bornes de la batterie (10), du consommateur électrique et la carcasse (2), et comportant une unité de lancement (43) des phases de charge de la batterie (10), ledit système étant **caractérisé en ce que** ladite unité de lancement est configurée pour, lorsque le consommateur électrique reçoit une commande de mise en fonctionnement :

   - interdire temporairement une phase de recharge de la batterie (10),
   - estimer ladite résistance minimale d'isolation,
   - autoriser la reprise de ladite phase de recharge de la batterie (10) seulement si ladite résistance minimale d'isolation ($R_{filt}(t)$) mesurée est supérieure à un premier seuil ($R_{seul\_1}$).

2. Système d'alimentation selon la revendication 1, dans lequel le consommateur électrique est un compresseur (50).

3. Système d'alimentation selon la revendication 1 ou 2, dans lequel l'unité de lancement (43) est configurée pour interdire une phase de recharge de la batterie (10) et émettre un message d'alerte si pendant une durée supérieure à un troisième seuil ($t_3$), la résistance minimale d'isolation reste inférieure à un second seuil ($R_{seuil\_1}$).

4. Système d'alimentation selon la revendication 3, dans lequel l'unité de lancement (43) est configurée pour interdire à titre seulement temporaire, sans message d'alerte, une phase de recharge de la batterie (10) si la résistance minimale d'isolation est inférieure au premier seuil ($R_{seuil\_1}$) pendant une durée inférieure au troisième seuil ($t_3$) à partir de la demande d'un utilisateur de lancer la charge.

5. Système d'alimentation selon la revendication 4, dans lequel la résistance minimale d'isolation ($R_{filt}(t)$) est une valeur filtrée, au moins une valeur d'initialisation du calcul de la valeur filtrée étant inférieure au second seuil ($R_{seuil\_1}$).

6. Système d'alimentation selon la revendication 5, dans lequel l'unité de lancement (43) est configurée pour, pendant les mesures de résistance minimale d'isolation, fermer au moins une connexion reliant une bobine (6) du chargeur (44) à une borne de la batterie (10) et du consommateur électrique.

7. Système d'alimentation selon la revendication précédente, dans lequel la bobine (6) est une bobine appartenant au moteur du véhicule.

8. Système d'alimentation selon la revendication 7, dans lequel le dispositif d'estimation de la résistance minimale d'isolation comprend une ou plusieurs impédances (19-15, 16-17) qui peuvent être alternativement connectées et déconnectées entre une des bornes de la batterie et la carcasse et dans lequel l'unité de lancement (43) est configurée pour déconnecter d'avec les bornes de la batterie (10), au moins une résistance (19, 15) servant au calcul de la résistance minimale d'isolation, avant d'autoriser la connexion du chargeur (44) à une ou plusieurs phases(7) du réseau extérieur, en vue de démarrer la charge de la batterie (10).

**Patentansprüche**

1. Elektrisches Versorgungssystem (1) für ein Kraftfahrzeug, umfassend ein Ladegerät (44), eine Akkumulatorenbatterie (10) und einen elektrischen Verbraucher, die geeignet sind, über das Ladegerät (44) elektrischen Strom zu empfangen, der von einem Stromversorgungsnetzwerk (41) außerhalb des Fahrzeugs fließt, wobei das Versorgungssystem (1) mindestens teilweise von einem leitfähigen Rahmen (2) getragen ist, der konfiguriert ist, um mit einem Erdungsanschluss des externen Netzwerks (41) verbunden zu werden, wobei das System eine Vorrichtung zum Schätzen eines minimalen Isolationswiderstandes ($R_{filt}(t)$) zwischen den Anschlussklemmen der Batterie (10), des elektrischen Verbrauchers und dem Rahmen (2) aufweist und eine Einheit zum Einleiten (43) der Ladephasen der Batterie (10) aufweist, wobei das System **dadurch gekennzeichnet ist, dass** die Einheit zum Einleiten konfiguriert ist, um, wenn der elektrische Verbraucher einen Inbetriebnahmebefehl empfängt:

    - vorübergehend eine Nachladephase der Batterie (10) zu verbieten,
    - den minimalen Isolationswiderstand zu schätzen,
    - das Wiederaufnehmen der Nachladephase der Batterie (10) nur dann zu genehmigen, wenn der gemessene minimale Isolationswiderstand ($R_{filt}(t)$)größer als ein erster Schwellenwert ($R_{seuil\_}1$) ist.

2. Versorgungssystem nach Anspruch 1, wobei der elektrische Verbraucher ein Kompressor (50) ist.

3. Versorgungssystem nach Anspruch 1 oder 2, wobei die Einheit zum Einleiten (43) konfiguriert ist, um eine Nachladephase der Batterie (10) zu verbieten und eine Warnmeldung auszugeben, wenn der minimale Isolationswiderstand während einer Dauer, die länger als ein dritter Schwellenwert ($t_3$) ist, niedriger als ein zweiter Schwellenwert ($R_{seuil\_}1$) bleibt.

4. Versorgungssystem nach Anspruch 3, wobei die Einheit zum Einleiten (43) konfiguriert ist, um nur vorübergehend ohne Warnmeldung eine Nachladephase der Batterie (10) zu verbieten, wenn der minimale Isolationswiderstand während einer Dauer, die kürzer als ein dritter Schwellenwert ($t_3$) ist, ab der Anfrage eines Benutzers, das Laden einzuleiten, niedriger als der erste Schwellenwert ($R_{seuil\_}1$) ist.

5. Versorgungssystem nach Anspruch 4, wobei der minimale Isolationswiderstand ($R_{filt}(t)$) ein gefilterter Wert ist, wobei mindestens ein Initialisierungswert des Berechnens des gefilterten Werts niedriger als der zweite Schwellenwert ($R_{seuil\_}1$) ist.

6. Versorgungssystem nach Anspruch 5, wobei die Einheit zum Einleiten (43) konfiguriert ist, um während der Messungen des minimalen Isolationswiderstands mindestens eine Verbindung zu schließen, die eine Spule (6) des Ladegerätes (44) mit einer Anschlussklemme der Batterie (10) und des elektrischen Verbrauchers verbindet.

7. Versorgungssystem nach dem vorhergehenden Anspruch, wobei die Spule (6) eine Spule ist, die zu dem Fahrzeugmotor gehört.

8. Versorgungssystem nach Anspruch 7, wobei die Vorrichtung zum Schätzen des minimalen Isolationswiderstands eine oder mehrere Impedanzen (19-15, 16-17) aufweist, die abwechselnd zwischen einer der Anschlussklemmen der Batterie und des Rahmens angeschlossen und abgeklemmt werden können, und wobei die Einheit zum Einleiten (43) konfiguriert ist, um von den Anschlussklemmen der Batterie (10) mindestens einen Widerstand (19, 15) abzuklemmen, der zum Berechnen des minimalen Isolationswiderstandes dient, bevor das Anschließen des Ladegeräts (44) an eine oder mehrere Phasen (7) des externen Netzwerks genehmigt wird, um mit dem Laden der Batterie (10) zu beginnen.

**EP 3 052 336 B1**

**Claims**

1. Electric power supply system (1) for a motor vehicle, comprising a charger (44), an accumulator battery (10) and an electrical consumer that are able to receive, by way of the charger (44), electric current flowing from an external electric power supply network (41) to the vehicle, the power supply system (1) being supported at least partly by a conductive frame (2) configured to be able to be linked to a ground connection of the external network (41), the system including a device for estimating a minimum insulation resistance ($R_{filt}(t)$) between the terminals of the battery (10), of the electrical consumer and the frame (2), and including a unit (43) for launching battery (10) charging phases, said system being **characterized in that** said launching unit is configured, when the electrical consumer receives a startup order, to:

   - temporarily prohibit a battery (10) recharging phase,
   - estimate said minimum insulation resistance,
   - authorize the resumption of said battery (10) recharging phase only if said measured minimum insulation resistance ($R_{filt}(t)$) is greater than a first threshold ($R_{seuil\_1}$).

2. Power supply system according to Claim 1, wherein the electrical consumer is a compressor (50).

3. Power supply system according to Claim 1 or 2, wherein the launching unit (43) is configured to prohibit a battery (10) recharging phase and emit an alert message if the minimum insulation resistance remains lower than a second threshold ($R_{seuil\_1}$) for a period longer than a third threshold ($t_3$).

4. Power supply system according to Claim 3, wherein the launching unit (43) is configured to prohibit a battery (10) recharging phase only temporarily and without an alert message if the minimum insulation resistance is lower than the first threshold ($R_{seuil\_1}$) for a period shorter than the third threshold ($t_3$) starting from a user request to launch the charging.

5. Power supply system according to Claim 4, wherein the minimum insulation resistance ($R_{filt}(t)$) is a filtered value, at least one initialization value of the calculation of the filtered value being lower than the second threshold ($R_{seuil\_1}$).

6. Power supply system according to Claim 5, wherein the launching unit (43) is configured, during the minimum insulation resistance measurements, to close at least one connection linking a coil (6) of the charger (44) to a terminal of the battery (10) and of the electrical consumer.

7. Power supply system according to the preceding claim, wherein the coil (6) is a coil belonging to the motor of the vehicle.

8. Power supply system according to Claim 7, wherein the device for estimating the minimum insulation resistance comprises one or more impedances (19-15, 16-17) that are able to be connected and disconnected alternately between one of the terminals of the battery and the frame, and wherein the launching unit (43) is configured to disconnect at least one resistor (19, 15) used for the calculation of the minimum insulation resistance from the terminals of the battery (10) before authorizing the connection of the charger (44) to one or more phases (7) of the external network, for the purpose of starting up the charging of the battery (10).

FIG.1

FIG.2

EP 3 052 336 B1

45 Activation redresseur-onduleur depuis Δt≥t₂

43

26 $R_{fil} > R_{seuil_1}$

29 NOT  negbool

46 Negbool = 1 depuis Δt≥t₃

36 Interdiction recharge + message alerte

37 Interdiction recharge

30 AND

27 Relais de mesure fermés depuis Δt≥t₁

31 NOT

35 Set / Reset

bool

34 bool=1  non / oui

38 Connexion au réseau

40 Charge batterie

28 Batterie déjà en charge

42 OR

32 NOT

33 AND

39 Déconnexion impédances de mesure

47 Chargeur activé

## FIG. 3

**RÉFÉRENCES CITÉES DANS LA DESCRIPTION**

**Documents brevets cités dans la description**

- DE 102010062369 A